# EUROPÄISCHE PATENTSCHRIFT

(11) **EP 3 974 171 B1**
(45) Veröffentlichungstag und Bekanntmachung des Hinweises auf die Patenterteilung: **20.03.2024**
(21) Anmeldenummer: 21194026.7
(22) Anmeldetag: 31.08.2021
(51) Int. Cl.: B32B 1/08, B32B 25/14, B32B 25/16, B32B 25/10, B32B 25/04

(54) **FLUIDLEITUNG ZUM LEITEN EINES FLUIDS**
FLUID CONDUIT FOR GUIDING A FLUID
CONDUITE DESTINÉE À CONDUIRE UN FLUIDE

(30) Priorität: 29.09.2020 DE 102020125446
(43) Veröffentlichungstag der Anmeldung: 30.03.2022
(73) Patentinhaber: VERITAS AG, 63571 Gelnhausen (DE)
(72) Erfinder: ROSEMANN, Michael, 63594 Hasselroth (DE); VAN HOOREN, Marc, 63579 Freigericht (DE)
(74) Vertreter: Patentship Patentanwaltsgesellschaft mbH

(56) Entgegenhaltungen:
- EP-A1- 2 871 212
- EP-A1- 3 555 197
- EP-A1- 3 666 516
- WO-A1-2018/107052

## Beschreibung

Die vorliegende Erfindung betrifft eine Fluidleitung zum Leiten eines Fluids, insbesondere eine Fluidleitung in einem Fahrzeug zum Leiten eines Fluids.

In einem Fahrzeug wird eine Vielzahl von Fluidleitungen verwendet, um Gase oder Flüssigkeiten zu transportieren. Um einen Verbrennungsmotor eines Kraftfahrzeuges während des Betriebs mit Ladeluft zu versorgen, wird Ladeluft durch eine als Ladeluftleitung ausgebildete Fluidleitung geleitet. Aufgrund der während des Verbrennungsvorgangs von Kraftstoff freigesetzten Wärme ist es entscheidend, dass eine entsprechende Ladeluftleitung eine hohe Temperaturbeständigkeit aufweist. Zudem ist es vorteilhaft, wenn eine entsprechende Ladeluftleitung eine vorteilhafte strukturelle Stabilität und eine chemische Widerstandsfähigkeit gegenüber einer Vielzahl von Medien aufweist, z.B. gegenüber Säure-haltigen Kondensaten und/oder Motoröl, um eine Beschädigung der entsprechenden Ladeluftleitung während des Betriebs zu vermeiden.

In der DE 10 2009 026 254 A1 ist ein Schlauch mit einer Innenschicht aus einer aminisch vernetzten Kautschukmischung mit medienbeständigen Eigenschaften, einer Haftschicht aus einer peroxidisch vernetzten Kautschukmischung, einer Festigkeitsträgerschicht und einer Außenschicht offenbart.

In der EP 1 546 595 B1 ist ein Schlauch, insbesondere für Lufteinlasskreisläufe eines Fahrzeugmotors, offenbart, wobei der Schlauch eine Innenschicht aus einem polaren Material, eine Zwischenschicht und eine äußere Schicht mit jeweils aus mit Peroxid vernetzten Materialien umfasst.

Die Druckschrift EP 3 666 516 A1 offenbart eine Fluidleitung zum Leiten eines Fluids.

Die Druckschrift WO 2018/107052 A offenbart eine Fluidleitung.

Es ist die der Erfindung zugrundeliegende Aufgabe, eine Fluidleitung für ein Kraftfahrzeug bereitzustellen, welche eine vorteilhafte chemische und mechanische Widerstandsfähigkeit aufweist, sowie hohen Temperaturen widerstehen kann.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Fluidleitung zum Leiten eines Fluids gelöst, mit einer Außenschicht, welche ein Ethylen-Propylen-Dien-Kautschuk (EPDM) aufweist, einem Festigkeitsträger, welcher innerhalb der Außenschicht angeordnet ist; einer Zwischenschicht, welche ein Harz-vernetztes Ethylen-Propylen-Dien-Kautschuk (EPDM) und/oder ein Harz-vernetztes Ethylen-Vinylacetat-Copolymer (EVM) aufweist, und welche innerhalb des Festigkeitsträgers angeordnet ist, und einer Sperrschicht, welche innerhalb der Zwischenschicht angeordnet ist und welche einen Leitungsinnenraum der Fluidleitung zum Leiten des Fluids begrenzt, wobei die Sperrschicht ausgebildet ist, eine Diffusion des Fluids durch die Sperrschicht zu reduzieren.

Dadurch wird beispielsweise der technische Vorteil erreicht, dass eine Fluidleitung bereitgestellt werden kann, welche eine wirksame chemische Beständigkeit gegenüber Fluid aufweist, welches durch den Leitungsinnenraum der Fluidleitung geleitet wird, welche eine wirksame mechanische Beständigkeit gegenüber äußeren Einflüssen aufweist, und welche hohen Temperaturen wirksam widerstehen kann.

Die Sperrschicht grenzt die Fluidleitung gegenüber dem Leitungsinnenraum der Fluidleitung ab und reduziert eine Diffusion des Fluids durch die Sperrschicht. Dadurch kann sichergestellt werden, dass auch chemisch reaktive Fluide, welche durch die Fluidleitung geleitet werden, die Fluidleitung nicht beschädigen, so dass eine wirksame Leitung von Fluiden, wie z.B. Ladeluft mit Säuren-haltigen Kondensaten, bzw. Motoröl, durch die Fluidleitung sichergestellt werden kann. Zudem weist die Sperrschicht eine hohe Temperaturbeständigkeit auf.

Insbesondere weist die Sperrschicht einen aminisch oder peroxidisch vernetzten Acrylat Kautschuk (AEM) und/oder einen aminisch oder peroxidisch vernetzten Polyacrylat-Kautschuk (ACM) auf.

Ein entsprechend aminisch oder peroxidisch vernetzter Acrylat Kautschuk (AEM) und/oder Polyacrylat-Kautschuk (ACM) weist eine besonders vorteilhafte Diffusions-hemmende Wirkung gegenüber einer Vielzahl von unterschiedlichen Fluiden auf und kann damit besonders vorteilhafte Eigenschaften der Sperrschicht sicherstellen.

Wird insbesondere ein aminisch vernetzter Ethylen-Acrylat Kautschuk (AEM) und/oder ein aminisch vernetzter Polyacrylat-Kautschuk (ACM) verwendet, umfasst dieser, bzw. umfassen diese insbesondere ein Diamin und einen basischen Aktivator, wobei das Diamin insbesondere Hexamethylendiamin (HMD), Hexamethylendiamin-Carbamat (HMDC) und/oder 2,2-Bis[4-(4-aminophenoxy)phenyl]propen umfasst, und/oder wobei der basische Aktivator insbesondere Diphenylguanidin (DPG) und/oder Diazabicycloundecen (DBU) umfasst.

Der Anteil des Diamins in der Sperrschicht beträgt insbesondere von 0,3 Gew.-% bis 2,1 Gew.-%, insbesondere von 0,4 Gew.-% bis 1,5 Gew.-%, insbesondere von 0,5 Gew.-% bis 1,0 Gew.-%. Der Anteil des basischen Aktivators in der Sperrschicht beträgt insbesondere von 0,5 Gew.-% bis 3,5 Gew.-%, insbesondere von 0,5 Gew.-% bis 2,4 Gew.-%, insbesondere von 0,7 Gew.-% bis 2,0 Gew.-%.

Wird insbesondere ein peroxidisch vernetzter Ethylen-Acrylat Kautschuk (AEM) und/oder ein peroxidisch vernetzter Polyacrylat-Kautschuk (ACM) verwendet, umfasst dieser, bzw. umfassen diese ein Peroxid-Derivat, einen Co-Aktivator, und/oder einen Säureakzeptor, wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, wobei der Co-Aktivator insbesondere Triallylcyanurat (TAC), Triallylisocyanurat (TAIC), Trimethylolpropan-trimethacrylat (TRIM), Dimethylacrylat, Trimethylacrylat, Triazin, und/oder Bismaleinimid umfasst, und/oder wobei der Säureakzeptor insbesondere Epoxidharze, epoxidierte Öle, Magnesiumoxid und/oder Hydrotalcit umfasst.

Der Anteil des Peroxid-Derivats in der Sperrschicht beträgt insbesondere von 0,5 Gew.-% bis 6,0 Gew.-%, insbesondere von 0,8 Gew.-% bis 4,0 Gew.-%, insbesondere von 1,0 Gew.-% bis 2,0 Gew.-%. Der Anteil des Co-Aktivators in der Sperrschicht beträgt insbesondere von 0,1 Gew.-% bis 10,0 Gew.-%, insbesondere von 0,5 Gew.-% bis 5,0 Gew.-%, insbesondere von 1,0 Gew.-% bis 2,0 Gew.-%.

Die Ethylen-Propylen-Dien-Kautschuk (EPDM) aufweisende Außenschicht der Fluidleitung gemäß der vorliegenden Offenbarung grenzt die Fluidleitung gegenüber einem Außenbereich der Fluidleitung ab und schützt den darunter liegenden Festigkeitsträger, die darunter liegende Zwischenschicht und die darunter liegende Sperrschicht vor mechanischer und/oder chemischer Beschädigung, z.B. falls die Fluidleitung in der beengten Bauraumsituation in einem Motorraum eines Kraftfahrzeugs in Kontakt mit anderen Bauteilen tritt, und/oder falls Kondensate, bzw. Motoröl mit der Außenseite der Fluidleitung in Kontakt tritt.

Der Festigkeitsträger, welcher zwischen der Außenschicht und der Zwischenschicht angeordnet ist, stellt eine wirksame strukturelle Stabilität der Fluidleitung sicher. Der Festigkeitsträger stellt sicher, dass auch wenn das Fluid mit einem hohen Druck durch die Fluidleitung geleitet wird, die strukturelle Integrität der Fluidleitung nicht beeinträchtigt wird. Dies wird dadurch gewährleistet, dass der Festigkeitsträger auf die Fluidleitung wirkende Druckkräfte wirksam aufnehmen kann.

Der Festigkeitsträger weist insbesondere aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon auf.

Dadurch wird beispielsweise der technische Vorteil erreicht, dass die genannten Fasern eine hohe Temperatur- und Druckbeständigkeit aufweisen und sich vorteilhaft zu verformbaren Festigkeitsträgern verarbeiten lassen. Aufgrund der mechanischen und chemischen Eigenschaften können insbesondere meta-Aramid-Fasern und/oder Polyoxadiazol-Fasern in dem Festigkeitsträger verwendet werden. Insbesondere können die Fasern des Festigkeitsträgers zudem Resorcin-Formaldehyd-Latex umfassen.

Der Festigkeitsträger ist insbesondere als ein einlagiger oder mehrlagiger Festigkeitsträger ausgebildet, und der Festigkeitsträger weist insbesondere ein Gewebe, Gewirk und/oder Gestrick auf.

Dadurch wird beispielsweise der technische Vorteil erreicht, dass ein entsprechend ausgebildeter Festigkeitsträger besonders wirksam Druckbelastungen aufnehmen kann.

Insbesondere kann der Festigkeitsträger einen ersten und einen weiteren Festigkeitsträger umfassen, welche zwischen der Zwischenschicht und der Außenschicht angeordnet sind.

Die Zwischenschicht der Fluidleitung gemäß der vorliegenden Offenbarung, welche zwischen dem Festigkeitsträger und der Sperrschicht angeordnet ist, stellt einen wirksamen Verbund zwischen dem Festigkeitsträger und der Sperrschicht sicher.

Die Zwischenschicht besteht hierbei aus einem Harz-vernetzten Ethylen-Propylen-Dien-Kautschuk (EPDM) und/oder einem Harz-vernetzten Ethylen-Vinylacetat-Copolymer (EVM). Das Harz-vernetzte Ethylen-Propylen-Dien-Kautschuk (EPDM) und/oder das Harz-vernetzte Ethylen-Vinylacetat-Copolymer (EVM) stellt hierbei eine hohe Temperaturbeständigkeit der Zwischenschicht sicher, und ermöglicht eine besonders kostenoptimierte Fertigung einer entsprechenden Fluidleitung.

Insbesondere besteht die Zwischenschicht ausschließlich aus Harz-vernetztem Ethylen-Propylen-Dien-Kautschuk (EPDM) oder ausschließlich aus Harz-vernetztem Ethylen-Vinylacetat-Copolymer (EVM). Alternative weist die Zwischenschicht eine Mischung aus Harz-vernetztem Ethylen-Propylen-Dien-Kautschuk (EPDM) und Harz-vernetztem Ethylen-Vinylacetat-Copolymer (EVM) auf.

Harz-vernetzter Ethylen-Propylen-Dien-Kautschuk (EPDM) und/oder Harz-vernetztes Ethylen-Vinylacetat-Copolymer (EVM) stellt eine vorteilhafte Alternative zu herkömmlich verwendeten auf Peroxiden oder Schwefel basierenden Vernetzungsmitteln dar, da diese besonders vorteilhaft in Hochtemperatur-Anwendungen verwendet werden können. Aufgrund der im Vergleich zu einer herkömmlichen Peroxid-Vernetzung langsameren Vernetzungsreaktion bei den erfindungsgemäßen Harzvernetzungen wird eine besonders vorteilhafte dynamische Beständigkeit der Fluidleitung sichergestellt.

Insbesondere umfasst die Zwischenschicht einen Haftvermittler, wobei der Haftvermittler insbesondere mehrfach ungesättigte Acrylate, bzw. Methacrylate umfasst, wie z.B. Ethylenglykoldimethacrylat (EGDMA), 1,6-Hexandioldimethacrylat (HDDMA), 1,3-Butandioldimethacrylat (1,3 BDDMA), Trimethylolpropantrimethacrylat (TRIM), Trimethylolpropantriacrylat (TMPTA), Dipentaerythritolpentaacrylat (DPPA) und/oder hochfunktionalisierte Acrylate. Durch den Haftvermittler kann insbesondere ein stabiler Verbund der Zwischenschicht mit der Sperrschicht und/oder mit dem Festigkeitsträger sichergestellt werden.

Die Fluidleitung ist hierbei insbesondere als ein formstabiler Formschlauch ausgebildet, welcher insbesondere einen zweidimensional oder dreidimensional gekrümmten Verlauf aufweist, so dass ein wirksames Verlegen der Fluidleitung in einer beengten Bauraumsituation ermöglicht wird.

Somit gewährleistet die Fluidleitung gemäß der vorliegenden Offenbarung eine kostengünstige Konstruktion einer Fluidleitung, welche eine vorteilhafte chemische Beständigkeit, insbesondere gegenüber Motoröl, Kraftstoff und/oder Säure-haltigen Kondensaten aufweist, welche eine hohe mechanische Widerstandsfähigkeit, insbesondere gegenüber einem Fluid, welches mit hohem Druck durch die Fluidleitung geleitet wird, aufweist, und welche zudem hohen Temperaturen wirksam widerstehen kann.

In einer vorteilhaften Ausführungsform weist das Harz-vernetzte Ethylen-Propylen-Dien-Kautschuk (EPDM) und/oder das Harz-vernetzte Ethylen-Vinylacetat-Copolymer (EVM) ein Phenol-Vernetzungsharz auf, welches mit dem Ethylen-Propylen-Dien-Kautschuk (EPDM) und/oder Ethylen-Vinylacetat-Copolymer (EVM) vernetzt ist.

Dadurch wird der technische Vorteil erreicht, dass ein entsprechendes Phenol-Vernetzungsharz eine vorteilhafte Alternative zu herkömmlich verwendeten auf Peroxiden oder Schwefel basierenden Vernetzungsmitteln darstellt. Ein entsprechendes Phenol-Vernetzungsharz kann besonders vorteilhaft in Hochtemperatur-Anwendungen verwendet werden.

In einer vorteilhaften Ausführungsform weist das Phenol-Vernetzungsharz aus Phenol-Monomeren gebildete Phenol-Polymer auf, wobei die Phenol-Monomere insbesondere substituierte Phenol-Monomere umfassen.

Dadurch wird der technische Vorteil erreicht, dass das Phenol-Polymer des Phenol-Vernetzungsharzes eine besonders wirksame Vernetzung mit dem Ethylen-Propylen-Dien-Kautschuk (EPDM) und/oder dem Ethylen-Vinylacetat-Copolymer (EVM) sicherstellt.

Die Vernetzung des Phenol-Polymers mit dem Ethylen-Propylen-Dien-Kautschuk (EPDM) und/oder dem Ethylen-Vinylacetat-Copolymer (EVM) erfolgt insbesondere durch eine Cycloaddition des Phenol-Polymers an das EPDM und/oder EVM, insbesondere unter Beteiligung der Hydroxygruppen des jeweiligen Phenol-Monomers des Phenol-Polymers und unter Beteiligung der Kohlenstoff-Kohlenstoff-Doppelbindungen des EPDM und/oder EVM, wobei nach der Cycloaddition eine auf Oxiran basierende Struktur entsteht.

Umfassen die Phenol-Monomere insbesondere substituierte Phenole kann durch die Wahl der Phenol-Substituenten eine besonders wirksame Polymerisation der einzelnen Phenol-Monomere zu dem Phenol-Polymer erfolgen, wobei die Phenol-Substituenten hierbei insbesondere als Brücken zwischen den einzelnen Phenol-Monomeren des Phenol-Polymers fungieren.

In einer vorteilhaften Ausführungsform umfassen die substituierten Phenol-Monomere, insbesondere Alkyl-substituierte und/oder Hydroxyalkyl-substituierte Phenol-Monomere, insbesondere mit verzweigten Alkyl-Substituenten und/oder mit Hydroxymethyl-Substituenten substituierte Phenol-Monomere.

Dadurch wird der technische Vorteil erreicht, dass durch die gewählten Substituenten der substituierten Phenol-Monomere die Vernetzungsreaktion des Phenol-Vernetzungsharzes besonders vorteilhaft gesteuert werden kann.

Hierbei können die substituierten Phenol-Monomere ausschließlich Alkyl-substituierte Phenol-Monomere oder ausschließlich Hydroxyalkyl-substituierte Phenol-Monomere umfassen. Alternativ können die substituierten Phenol-Monomere sowohl Alkyl-substituierte Phenol-Monomere als auch Hydroxyalkyl-substituierte Phenol-Monomere umfassen.

Die Alkyl- und/oder Hydroxyalkyl-Substituenten können insbesondere in ortho-, meta- und/oder para-Position an dem Phenol-Monomer angeordnet sein.

Die Hydroxyalkyl-Substituenten können hierbei insbesondere eine Polymerisation der Phenol-Monomere zu den Phenol-Polymeren des Vernetzungsharzes sicherstellen, insbesondere durch das Ausbilden von Alkylbrücken und/oder durch das Ausbilden von Alkyletheralkyl-Brücken zwischen den einzelnen Phenol-Monomeren.

Umfassen die Hydroxyalkyl-Substituenten insbesondere Hydroxymethyl-Substituenten, dann umfassen die Alkylbrücken zwischen den einzelnen Phenol-Monomeren insbesondere Methylbrücken, -(CH₂)-, und/oder umfassen die Alkyletheralkyl-Brücken zwischen den einzelnen Phenol-Monomeren insbesondere Methylethermethyl-Brücken, -(CH₂)-O-(CH₂)-.

Insbesondere sind die Hydroxyalkyl-Substituenten, insbesondere Hydroxymethyl-Substituenten, in der ortho-Position an dem Phenol-Monomer angeordnet.

Die Alkyl-Substituenten der Phenol-Monomere können hierbei insbesondere eine wirksame Vernetzung der Phenol-Polymere an den Kohlenstoff-Kohlenstoff-Doppelbindungen des EPDM und/oder EVM sicherstellen.

Insbesondere umfassen die Alkyl-Substituenten verzweigte Alkyl-Substituenten, insbesondere Alkyl-Substituenten, welche mit einer Mehrzahl von Methyl-Gruppen substituiert sind. Insbesondere umfassen die Alkyl-Substituenten einen 1,1,3,3-Tetramethylbutyl-Substituent.

Insbesondere sind die Alkyl-Substituenten, insbesondere die verzweigten Alkyl-Substituenten, insbesondere der 1,1,3,3-Tetramethylbutyl-Substituent in der para-Position an dem Phenol-Monomer angeordnet.

In einer vorteilhaften Ausführungsform ist das Phenol-Vernetzungsharz in einem Gewichtsanteil von 5 Gew.-% bis 15 Gew.-%, insbesondere von 7 Gew.-% bis 13 Gew.-%, bezogen auf das Gesamtgewicht des Ethylen-Propylen-Dien-Kautschuks (EPDM) und/oder des Ethylen-Vinylacetat-Copolymers (EVM) vor der Vernetzungsreaktion umfasst.

Dadurch wird der technische Vorteil erreicht, dass die Zugabe des Phenol-Vernetzungsharzes mit den beanspruchten Gewichtsanteilen eine besonders vorteilhafte Vernetzungsreaktion mit dem Ethylen-Propylen-Dien-Kautschuks (EPDM) und/oder dem Ethylen-Vinylacetat-Copolymers (EVM) sicherstellt.

Das Phenol-Vernetzungsharz wird hierbei vor dem Beginn der Vernetzungsreaktion dem Ethylen-Propylen-Dien-Kautschuk (EPDM) und/oder dem Ethylen-Vinylacetat-Copolymer (EVM) mit den beanspruchten Gewichtsanteilen zugegeben.

In einer vorteilhaften Ausführungsform umfasst das Harz-vernetzte Ethylen-Propylen-Dien-Kautschuk (EPDM) und/oder das Harz-vernetzte Ethylen-Vinylacetat-Copolymer (EVM) der Zwischenschicht einen Vernetzungs-Aktivator, wobei der Vernetzungs-Aktivator insbesondere ein Halogenierungsreagenz umfasst.

Dadurch wird der technische Vorteil erreicht, dass die Zugabe des Vernetzungs-Aktivators eine besonders vorteilhafte Vernetzung zwischen Vernetzungs-Harz, insbesondere Phenol-Harz, und dem Ethylen-Propylen-Dien-Kautschuk (EPDM) und/oder dem Ethylen-Vinylacetat-Copolymer (EVM) sicherstellt.

Hierbei aktiviert der Vernetzungs-Aktivator insbesondere die Kohlenstoff-Kohlenstoff-Doppelbindungen des Ethylen-Propylen-Dien-Kautschuks (EPDM) und/oder des Ethylen-Vinylacetat-Copolymers (EVM), so dass die anschließende Vernetzung mit dem Vernetzungs-Harz, insbesondere Phenol-Harz, besonders vorteilhaft ablaufen kann.

Insbesondere umfasst der Vernetzungs-Aktivator ein Halogenierungsreagenz, insbesondere Fluorierungs-, Chlorierungs-, Bromierungs- und/oder lodierungs-Reagenz, welches ein Halogenid, insbesondere Fluorid, Chlorid, Bromid, und/oder lodid, freisetzt, welches den Ethylen-Propylen-Dien-Kautschuk (EPDM) und/oder den Ethylen-Vinylacetat-Copolymers (EVM), insbesondere die entsprechenden Kohlenstoff-Kohlenstoff-Doppelbindungen des EPDM und/oder des EVM aktiviert.

Entsprechende Halogenierungsreagenzien umfassen insbesondere Brom, Chlor, und/oder Zinnchlorid.

Insbesondere kann das Halogenierungsreagenz auch ein Bestandteil des Vernetzungsharzes, insbesondere Phenol-Harz, sein, wobei hierbei insbesondere die Phenol-Monomere Halogen-Substituenten, insbesondere Halogenalkyl-Substituenten, aufweisen, welche die Abgabe von Halogeniden ermöglichen, um die entsprechenden Kohlenstoff-Kohlenstoff-Doppelbindungen des EPDM und/oder des EVM zu aktivieren.

In einer vorteilhaften Ausführungsform umfasst das Harz-vernetzte Ethylen-Propylen-Dien-Kautschuk (EPDM) und/oder das Harz-vernetzte Ethylen-Vinylacetat-Copolymer (EVM) der Zwischenschicht einen weiteren Vernetzungs-Aktivator, welcher insbesondere ein Zeolith umfasst.

Dadurch wird der technische Vorteil erreicht, dass der weitere Vernetzungs-Aktivator, welcher insbesondere ein Zeolith umfasst, eine vorteilhafte Verbesserung, insbesondere Beschleunigung, der Vernetzungsreaktion zwischen dem Vernetzungs-Harz, insbesondere Phenol-Harz, und dem Ethylen-Propylen-Dien-Kautschuk (EPDM) und/oder dem Ethylen-Vinylacetat-Copolymer (EVM) sicherstellt.

Insbesondere ist das Zeolith in einem Gewichtsanteil von 3 Gew.-% bis 15 Gew.-%, insbesondere von 5 Gew.-% bis 10 Gew.-%, bezogen auf das Gesamtgewicht des Ethylen-Propylen-Dien-Kautschuks (EPDM) und/oder des Ethylen-Vinylacetat-Copolymers (EVM) vor der Vernetzungsreaktion umfasst.

Durch die Zugabe des Zeoliths können zudem die mechanischen Eigenschaften der Zwischenschicht verbessert werden und die Vernetzungsreaktion kann beschleunigt werden.

In einer vorteilhaften Ausführungsform ist die Fluidleitung als ein formstabiler Formschlauch ausgebildet ist, wobei der Formschlauch insbesondere einen zweidimensional oder dreidimensional gekrümmten Verlauf aufweist.

Dadurch wird der technische Vorteil erreicht, dass ein Formschlauch besonders vorteilhaft in einer beengten Bauraumsituation, z.B. in einem Motorraum eines Kraftfahrzeuges, verlegt werden kann. Hierbei kann die zweidimensionale oder dreidimensionale Krümmung des Formschlauchs an die geometrischen Beschränkungen in dem Bauraum angepasst werden. Der Formschlauch kann zumindest abschnittsweise elastisch sein, wodurch der Formschlauch beim Einbau partiell aufgebogen werden kann, um einen wirksamen Einbau zu gewährleisten, wobei sich der Formschlauch nach dem Einbau jedoch wieder in die ursprüngliche Form des Formschlauchs zurück verformt, so dass der Formschlauch eine wirksame Formstabilität aufweist, Insbesondere weist der zweidimensional oder dreidimensional gekrümmte formstabile Formschlauch eine Mehrzahl von Biegungen auf.

In einer vorteilhaften Ausführungsform ist die Fluidleitung als ein Spritzgussformteil oder ein Extrusionsformteil geformt.

Dadurch wird beispielsweise der technische Vorteil erreicht, dass ein Spritzgussformteil oder Extrusionsformteil eine besonders vorteilhafte Fertigung der Fluidleitung sicherstellt und zudem eine wirksame Anordnung und stabile Verbindung der einzelnen Schichten innerhalb der Fluidleitung sichergestellt wird.

In einer vorteilhaften Ausführungsform ist die Fluidleitung als eine Ladeluftleitung geformt, welche ausgebildet ist, Ladeluft, insbesondere Ladeluft mit Säuren, Kondensaten, und/oder Motoröl, in einem Fahrzeug zu leiten.

Dadurch wird beispielsweise der technische Vorteil erreicht, dass eine Ladeluftleitung eine wirksame chemische und mechanische Beständigkeit gegenüber gegebenenfalls verunreinigter Ladeluft aufweist.

In einer vorteilhaften Ausführungsform weist die Fluidleitung einen Innendurchmesser zwischen 20 mm und 100 mm, insbesondere zwischen 30 mm und 85 mm auf.

Dadurch wird beispielsweise der technische Vorteil erreicht, dass der Innendurchmesser der Fluidleitung ein ausreichend großes Volumen des Leitungsinnenraums bereitstellt, so dass eine ausreichende Menge an Fluid durch den Leitungsinnenraum der Fluidleitung geführt werden kann.

In einer vorteilhaften Ausführungsform weist die Fluidleitung eine Wandstärke zwischen 2 mm und 7 mm, insbesondere zwischen 3,5 mm und 5,0 mm auf.

Dadurch wird beispielsweise der technische Vorteil erreicht, dass die Wandstärke eine ausreichende Stabilität der Fluidleitung bereitstellt, so dass die Fluidleitung auch in einer beengten Bauraumsituation wirksam verlegt werden kann.

Gemäß einem zweiten Aspekt der Erfindung wird die Aufgabe durch ein Verfahren zum Herstellen einer Fluidleitung zum Leiten eines Fluids gelöst, umfassend die folgenden Schritte, Extrudieren einer Sperrschicht, welche einen Leitungsinnenraum der Fluidleitung zum Leiten des Fluids begrenzt, wobei die Sperrschicht ausgebildet ist, eine Diffusion des Fluids durch die Sperrschicht zu reduzieren, Extrudieren einer Zwischenschicht auf der Sperrschicht, wobei die Zwischenschicht ein Harz-vernetztes Ethylen-Propylen-Dien-Kautschuk (EPDM) und/oder ein Harz-vernetztes Ethylen-Vinylacetat-Copolymer (EVM) aufweist, Anordnen eines Festigkeitsträgers auf der Zwischenschicht, und Extrudieren einer Außenschicht auf dem Festigkeitsträger, wobei die Außenschicht einen Ethylen-Propylen-Dien-Kautschuk (EPDM) aufweist.

Insbesondere wird das Extrudieren der Sperrschicht, das Extrudieren der Zwischenschicht und das Extrudieren einer Außenschicht im Rahmen eines Co-Extrusions-Schrittes durchgeführt.

Dadurch wird beispielsweise der technische Vorteil erreicht, dass das Verfahren die vorteilhafte Herstellung einer vier-lagigen Fluidleitung mit einer wirksamen chemischen und mechanischen Beständigkeit sicherstellt.

In einer Ausführungsform umfasst das Extrudieren der Zwischenschicht den weiteren Verfahrensschritt, Vernetzen des Ethylen-Propylen-Dien-Kautschuks (EPDM) und/oder des Ethylen-Vinylacetat-Copolymers (EVM) mit einem Vernetzungsharz, insbesondere Phenol-Harz, um das Harz-vernetzte Ethylen-Propylen-Dien-Kautschuk (EPDM) und/oder das Harz-vernetzte Ethylen-Vinylacetat-Copolymer (EVM) der Zwischenschicht zu erhalten.

Die für die Fluidleitung gemäß dem ersten Aspekt angeführten Ausführungsformen sind ebenso Ausführungsformen für das Verfahren zum Herstellen einer Fluidleitung gemäß dem zweiten Aspekt. Ebenso sind die Ausführungsform für das Verfahren zum Herstellen einer Fluidleitung gemäß dem zweiten Aspekt Ausführungsform für die Fluidleitung gemäß dem ersten Aspekt.

Ausführungsbeispiele der Erfindung sind in den Zeichnungen dargestellt und werden im Folgenden näher beschrieben.

Es zeigen:
- Fig. 1: eine perspektivische Ansicht einer Fluidleitung gemäß einer Ausführungsform; und
- Fig. 2: eine schematische Darstellung eines Verfahrens zum Herstellen einer Fluidleitung.

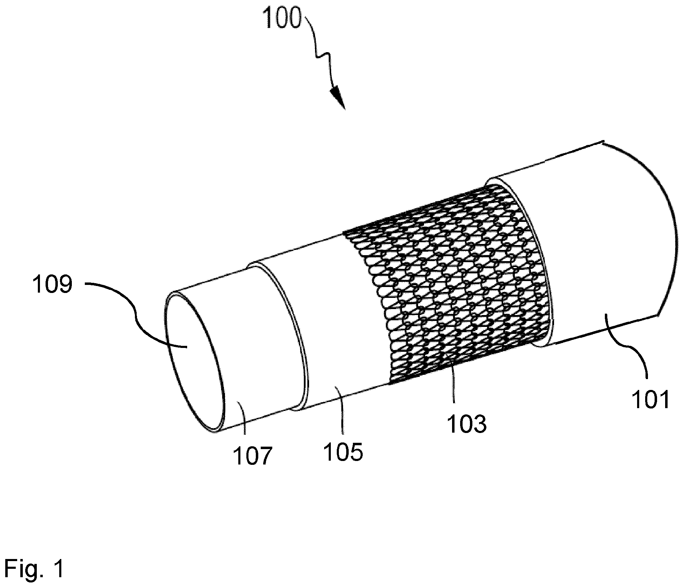

Fig. 1 zeigt eine perspektivische Ansicht einer Fluidleitung 100. Der Fluidleitung 100 umfasst insbesondere eine Fluidleitung 100 für Fahrzeuge, insbesondere für Kraftfahrzeuge mit einem Verbrennungsmotor.

Kraftfahrzeuge mit Verbrennungsmotoren weisen Fluidleitungen 100 auf, welche insbesondere eine Ladeluftleitung umfassen, welche ausgebildet ist, Ladeluft dem Verbrennungsmotor zuzuführen.

Die durch eine Ladeluftleitung geleitete Ladeluft kann neben der Ladeluft auch noch Verunreinigungen, wie z.B. Motoröl, Kraftstoffdämpfe, Kraftstoffkondensate, Abgase, Blowby-Gase und/oder Säuren, umfassen. Aus diesem Grund müssen Fluidleitungen 100 zur Leitung von Ladeluft eine ausreichende chemische Beständigkeit gegenüber dem geleiteten Fluid aufweisen. Um den mit hohen Temperaturen und hohen Druck geleiteten Fluiden widerstehen zu können, bzw. um den hohen Temperaturen in der unmittelbaren Nähe des Verbrennungsmotors widerstehen zu können, müssen die entsprechende Fluidleitungen 100 auch eine ausreichende Temperaturbeständigkeit und eine ausreichende mechanische Beständigkeit aufweisen. Zudem müssen die entsprechenden Fluidleitungen 100 in der beengten Bauraumsituation des Motoraums des Kraftfahrzeuges mit engen Biegeradien verlegt werden können, und aus diesem Grund dynamisch verformbare Eigenschaften aufweisen.

Die Fluidleitung 100 ist hierbei insbesondere als ein formstabiler Formschlauch ausgebildet, welcher insbesondere einen zweidimensional oder dreidimensional gekrümmten Verlauf aufweist, wodurch der Formschlauch besonders vorteilhaft in einer beengten Bauraumsituation eines Motorraums eines Kraftfahrzeuges verbaut werden kann. Bei der Herstellung einer als Formschlauch ausgebildeten Fluidleitung 100 wird ein Schlauchrohling in die gewünschte Form des Formschlauches gebogen. Anschließend wird der Schlauchrohling, z.B. durch Vulkanisation, in der gewünschten Form fixiert, so dass ein formstabiler Formschlauch erhalten wird. Der formstabile Formschlauch weist eine gewisse Flexibilität auf, jedoch kehrt der Formschlauch aufgrund seiner Formstabilität bei einem Verbiegen oder Verdrehen des Formschlauchs erneut in die ursprüngliche Form zurück. Ein zweidimensional oder dreidimensional gekrümmter formstabiler Formschlauch weist insbesondere eine Mehrzahl von Biegungen auf.

Die in der Fig. 1 dargestellte Fluidleitung 100 weist eine Außenschicht 101 auf, welche ausgebildet ist, die Fluidleitung 100 vor äußeren mechanischen und chemischen Einflüssen wirksam zu schützen. Die Außenschicht 101 weist hierbei ein Ethylen-Propylen-Dien-Kautschuk (EPDM) auf, welcher eine besonders vorteilhafte mechanische und chemische Widerstandsfähigkeit der Fluidleitung 100 sicherstellt, und zudem einfach und kostengünstig in der Außenschicht 101 verarbeitbar ist.

Durch die Außenschicht 101 kann eine mechanische Schutzfunktion der Fluidleitung 100 sichergestellt werden, da beim Kontakt der Außenschicht 101 der Fluidleitung 100 mit anderen Bauteilen in dem Fahrzeug auf die Außenschicht 101 wirkende mechanische Belastungen besonders wirksam durch die Außenschicht 101 aufgenommen werden können, so dass eine Beschädigung der innerhalb der Außenschicht 101 liegenden Schichten verhindert werden kann. Somit stellt die Außenschicht 101 der Fluidleitung 100 eine besonders vorteilhafte chemische und mechanische Schutzfunktion der Fluidleitung 100 sicher.

Die Fluidleitung 100 weist ferner einen Festigkeitsträger 103 auf, welcher innerhalb der Außenschicht 101 angeordnet ist, und welcher ausgebildet ist, auf die Fluidleitung 100 wirkende Kräfte wirksam aufzunehmen.

Insbesondere kann der Festigkeitsträger 103 als ein einlagiger oder mehrlagiger Festigkeitsträger 103 ausgebildet sein, und kann der Festigkeitsträger 103 insbesondere ein Gewebe, Gewirk und/oder Gestrick umfassen.

Insbesondere kann der Festigkeitsträger 103 aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon umfassen.

Insbesondere kann die Fluidleitung 100 einen ersten und einen weiteren Festigkeitsträger 103 aufweisen, welche zwischen der Zwischenschicht 105 und der Außenschicht 101 angeordnet sind.

Durch den Festigkeitsträger 103 kann eine wirksame mechanische Stabilisierung der Fluidleitung 100 sichergestellt werden.

Der Fluidleitung 100 gemäß der vorliegenden Offenbarung weist ferner eine Zwischenschicht 105 auf, welche innerhalb des Festigkeitsträgers 103 angeordnet ist, und welche ausgebildet ist, einen wirksamen Verbund zwischen dem Festigkeitsträger 103 und der weiter innen liegenden Sperrschicht 107 der Fluidleitung 100 bereitzustellen.

Die Zwischenschicht 105 weist ein Harz-vernetztes Ethylen-Propylen-Dien-Kautschuk (EPDM) und/oder ein Harz-vernetztes Ethylen-Vinylacetat-Copolymer (EVM) auf. Die entsprechende Harz-Vernetzung, erfolgt durch eine Vernetzung eines Vernetzungsharzes, insbesondere eines Phenol-Vernetzungsharzes mit dem Ethylen-Propylen-Dien-Kautschuk und/oder mit dem Ethylen-Vinylacetat-Copolymer (EVM).

Das Phenol-Vernetzungsharz weist hierbei aus Phenol-Monomeren gebildete Phenol-Polymere auf, wobei die Phenol-Monomere insbesondere substituierte Phenol-Monomere umfassen.

Die substituierten Phenol-Monomere umfassen hierbei insbesondere Alkyl-substituierte und/oder Hydroxyalkyl-substituierte Phenol-Monomere, insbesondere mit verzweigten Alkyl-Substituenten, insbesondere 1,1,3,3-Tetramethylbutyl-Substituenten, und/oder Hydroxymethyl-Substituenten substituierte Phenol-Monomere.

Die Vernetzung des Phenol-Polymers des Phenol-Vernetzungsharzes mit dem Ethylen-Propylen-Dien-Kautschuk (EPDM) und/oder dem Ethylen-Vinylacetat-Copolymer (EVM) erfolgt insbesondere durch eine Cycloaddition des Phenol-Polymers an das EPDM und/oder EVM, insbesondere unter Beteiligung der Hydroxygruppen des jeweiligen Phenol-Monomers des Phenol-Polymers und unter Beteiligung der Kohlenstoff-Kohlenstoff-Doppelbindungen des EPDM und/oder EVM, wobei nach der Cycloaddition eine auf Oxiran basierende Struktur entsteht.

Durch die Wahl der Phenol-Substituenten kann zum einen eine besonders wirksame Polymerisation der einzelnen Phenol-Monomere zu dem Phenol-Polymer sichergestellt werden, wobei die Phenol-Substituenten hierbei insbesondere Brücken zwischen den einzelnen Phenol-Monomeren des Phenol-Polymers formen, und kann zum anderen eine vorteilhafte, insbesondere beschleunigte Vernetzungsreaktion, zwischen dem Phenol-Polymer und dem Ethylen-Propylen-Dien-Kautschuk (EPDM) und/oder dem Ethylen-Vinylacetat-Copolymer (EVM) sichergestellt werden.

Durch die Hydroxyalkyl-Substituenten, insbesondere Hydroxymethyl-Substituenten, der Phenol-Monomere, welche insbesondere in der ortho-Position der Phenol-Monomere angeordnet sind, kann eine vorteilhafte Polymerisation der Phenol-Monomere zu den Phenol-Polymeren des Vernetzungsharzes ermöglicht werden. Die Hydroxyalkyl-Substituenten, insbesondere Hydroxymethyl-Substituenten, bilden Alkylbrücken, insbesondere Methylbrücken, -(CH₂)-, und/oder bilden insbesondere Alkyletheralkyl-Brücken, insbesondere Methylethermethyl-Brücken, -(CH₂)-O-(CH₂)-, zwischen den einzelnen Phenol-Monomeren innerhalb des Phenol-Polymers.

Durch die Alkyl-Substituenten, insbesondere verzweigte Alkyl-Substituenten, insbesondere 1,1,3,3-Tetramethylbutyl-Substituenten, der Phenol-Monomere, welche insbesondere in der para-Position der Phenol-Monomere angeordnet sind, kann die Vernetzungsreaktion optimiert, insbesondere beschleunigt, werden.

Um die Vernetzungsreaktion zu verbessern, umfasst das Harz-vernetzte Ethylen-Propylen-Dien-Kautschuk (EPDM) und/oder das Harz-vernetzte Ethylen-Vinylacetat-Copolymer (EVM) insbesondere einen Vernetzungs-Aktivator, welcher eine besonders vorteilhafte Vernetzung zwischen Vernetzungs-Harz, insbesondere Phenol-Harz, und dem Ethylen-Propylen-Dien-Kautschuk (EPDM) und/oder dem Ethylen-Vinylacetat-Copolymer (EVM) sicherstellt.

Hierbei aktiviert der Vernetzungs-Aktivator insbesondere die Kohlenstoff-Kohlenstoff-Doppelbindungen des Ethylen-Propylen-Dien-Kautschuks (EPDM) und/oder des Ethylen-Vinylacetat-Copolymers (EVM), so dass die anschließende Vernetzung mit dem Vernetzungs-Harz, insbesondere Phenol-Harz, besonders vorteilhaft ablaufen kann.

Insbesondere umfasst der Vernetzungs-Aktivator ein Halogenierungsreagenz, insbesondere Fluorierungs-, Chlorierungs-, Bromierungs- und/oder lodierungs-Reagenz, welches ein Halogenid, insbesondere Fluorid, Chlorid, Bromid, und/oder lodid, freisetzt, welches den Ethylen-Propylen-Dien-Kautschuk (EPDM) und/oder den Ethylen-Vinylacetat-Copolymers (EVM), insbesondere die entsprechenden Kohlenstoff-Kohlenstoff-Doppelbindungen des EPDM und/oder des EVM, aktiviert.

Entsprechende Halogenierungsreagenzien umfassen insbesondere Brom, Chlor, und/oder Zinnchlorid. Alternativ kann das Halogenierungsreagenz auch durch einen Halogen-Substituenten, insbesondere Brommethyl-Substituenten, der Phenol-Monomere gebildet werden, welcher ausgebildet ist, ein Halogenid, insbesondere Bromid, abzugeben, um die entsprechenden Kohlenstoff-Kohlenstoff-Doppelbindungen des EPDM und/oder des EVM zu aktivieren.

Insbesondere umfasst der Harz-vernetzte Ethylen-Propylen-Dien-Kautschuk (EPDM) und/oder das Harz-vernetzte Ethylen-Vinylacetat-Copolymer (EVM) der Zwischenschicht 105 einen weiteren Vernetzungs-Aktivator, welcher insbesondere ein Zeolith umfasst.

Insbesondere ist das Zeolith in einem Gewichtsanteil von 3 Gew.-% bis 15 Gew.-%, insbesondere von 5 Gew.-% bis 10 Gew.-%, bezogen auf das Gesamtgewicht des Ethylen-Propylen-Dien-Kautschuks (EPDM) und/oder des Ethylen-Vinylacetat-Copolymers (EVM) vor der Vernetzungsreaktion umfasst.

Durch die Zugabe des Zeoliths können zudem die mechanischen Eigenschaften der Zwischenschicht 105 verbessert werden und die Vernetzungsreaktion kann optimiert werden.

Durch eine entsprechende Harz-Vernetzung von EPDM und/oder EVM, insbesondere durch ein entsprechendes Phenol-Vernetzungsharz, kann eine vorteilhafte Alternative zu herkömmlich verwendeten auf Peroxiden oder Schwefel basierenden Vernetzungsmitteln bereitgestellt werden. Ein entsprechendes Phenol-Vernetzungsharz kann besonders vorteilhaft in Hochtemperatur-Anwendungen verwendet werden, und ermöglicht zudem eine Verbesserung einer Vielzahl von mechanischen Eigenschaften des Polymers.

Die Zwischenschicht 105 stellt hierbei einen wirksamen Verbund zwischen der Sperrschicht 107 und dem Festigkeitsträger 103 der Fluidleitung 100 sicher. Hierbei kann die Zwischenschicht 105 insbesondere einen Haftvermittler umfassen, wobei der Haftvermittler insbesondere mehrfach ungesättigte Acrylate, bzw. Methacrylate umfasst, wie z.B. Ethylenglykoldimethacrylat (EGDMA), 1,6-Hexandioldimethacrylat (HDDMA), 1,3-Butandioldimethacrylat (1,3 BDDMA), Trimethylolpropantrimethacrylat (TRIM), Trimethylolpropantriacrylat (TMPTA), Dipentaerythritolpentaacrylat (DPPA) und/oder hochfunktionalisierte Acrylate.

Die Fluidleitung 100 weist ferner eine Sperrschicht 107 auf, welche innerhalb der Zwischenschicht 105 angeordnet ist und welche einen Leitungsinnenraum 109 der Fluidleitung 100 zum Leiten des Fluids begrenzt, wobei die Sperrschicht 107 ausgebildet ist, eine Diffusion des Fluids durch die Sperrschicht 107 zu reduzieren.

Die Sperrschicht 107 umfasst hierbei insbesondere einen aminisch vernetzten Ethylen-Acrylat-Kautschuk (AEM) und/oder einen aminisch vernetzten Polyacrylat-Kautschuk (ACM) oder umfasst alternativ einen peroxidisch vernetzten Ethylen-Acrylat-Kautschuk (AEM) und/oder einen peroxidisch vernetzten Polyacrylat-Kautschuk (ACM).

Um eine wirksame Vernetzung innerhalb des aminisch vernetzten AEM- und/oder ACM-Kautschuks der Sperrschicht 107 zu erreichen, werden für die aminische Vernetzung unterschiedliche Vernetzungsmittel und Aktivatoren umfassen, die im Folgenden beschrieben sind.

Der aminisch vernetzte AEM- und/oder ACM-Kautschuk der Sperrschicht 107 umfasst ein aminisches Vernetzungsmittel, welches insbesondere ein Diamin, insbesondere Hexamethylendiamin (HMD), Hexamethylendiamin-Carbamat (HMDC), und/oder 2,2-Bis[4-(4-aminophenoxy)phenyl]propen umfasst. Der Anteil des aminischen Vernetzungsmittels in der Sperrschicht 107 beträgt insbesondere von 0,3 Gew.-% bis 2,1 Gew.-%, insbesondere von 0,4 Gew.-% bis 1,5 Gew.-%, insbesondere von 0,5 Gew.-% bis 1,0 Gew.-%.

Der aminisch vernetzte AEM- und/oder ACM-Kautschuk umfasst ein ferner einen basischen Aktivator, insbesondere Diphenylguanidin (DPG) und/oder Diazabicycloundecen (DBU). Der Anteil des basischen Aktivators in der Sperrschicht 107 beträgt insbesondere von 0,5 Gew.-% bis 3,5 Gew.-%, insbesondere von 0,5 Gew.-% bis 2,4 Gew.-%, insbesondere von 0,7 Gew.-% bis 2,0 Gew.-%.

Der peroxidisch vernetzte Ethylen-Acrylat Kautschuk (AEM) und/oder der peroxidisch vernetzte Polyacrylat-Kautschuk (ACM) umfasst ein peroxidisches Vernetzungsmittel, welches insbesondere ein Peroxid-Derivat, einen Co-Aktivator, und/oder einen Säureakzeptor umfasst. Das Peroxid-Derivat umfasst insbesondere ein Alkyl-Aralkyl-Peroxid-Derivat, ein Diaralkyl-Peroxid-Derivat, ein Peroxyketal-Derivat und/oder ein Peroxyester-Derivat. Der Co-Aktivator umfasst insbesondere Triallylcyanurat (TAC), Triallylisocyanurat (TAIC), Trimethylolpropan-trimethacrylat (TRIM), Dimethylacrylat, Trimethylacrylat, Triazin, und/oder Bismaleinimid. Der Säureakzeptor umfasst insbesondere Epoxidharze, epoxidierte Öle, Magnesiumoxid und/oder Hydrotalcit.

Die innerhalb der Zwischenschicht 105 der Fluidleitung 100 angeordnete Sperrschicht 107 begrenzt einen Leitungsinnenraum 109 der Fluidleitung 100 zum Leiten eines Fluids. Die Sperrschicht 107 ist hierbei ausgebildet eine Diffusion des Fluids durch die Sperrschicht 107 zu reduzieren.

Insbesondere kann die Fluidleitung 100 als ein Extrusionsformteil geformt sein. Die Sperrschicht 107, die Zwischenschicht 105, und die Außenschicht 101 können hierbei insbesondere in separaten Extrusions-Schritten oder in einem gemeinsamen Co-Extrusionsschritt extrudiert werden. Insbesondere können auch nur einige der Schichten, umfassend die Sperrschicht 107, die Zwischenschicht 105, und die Außenschicht 101, in einem Co-Extrusionsschritt extrudiert werden.

Somit ist die aus vier Lagen 101, 103, 105, 107 bestehende Fluidleitung 100 als eine kostengünstige Fluidleitung 100 ausgebildet, welche eine wirksame chemische und mechanische Beständigkeit gegenüber einem durch den Leitungsinnenraum 109 geleiteten Fluid und gegenüber äußeren chemischen und/oder mechanischen Einflüssen aufweist.

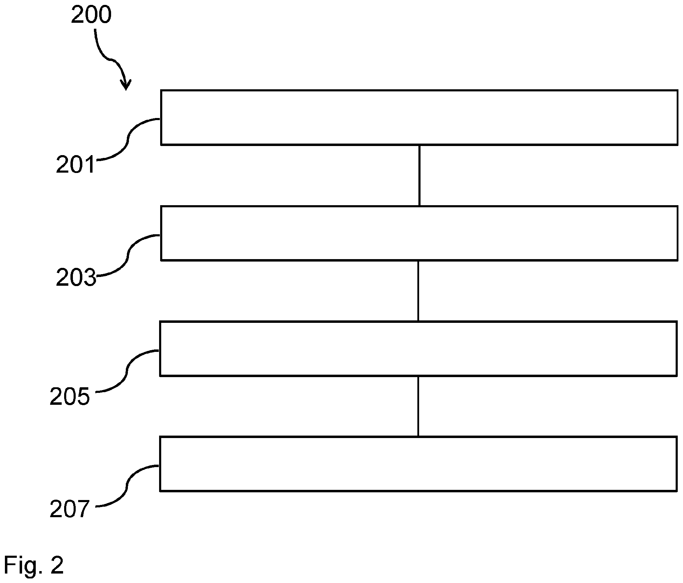

Fig. 2 zeigt eine schematische Darstellung eines Verfahrens zum Herstellen einer Fluidleitung.

Das Verfahren 200 umfasst als ersten Schritt das Extrudieren 201 einer Sperrschicht 107, welche einen Leitungsinnenraum 109 der Fluidleitung 100 zum Leiten des Fluids begrenzt, wobei die Sperrschicht 107 ausgebildet ist, eine Diffusion des Fluids durch die Sperrschicht 107 zu reduzieren.

Das Verfahren 200 umfasst als zweiten Schritt das Extrudieren 203 einer Zwischenschicht 105 auf der Sperrschicht 107, wobei die Zwischenschicht 105 ein Harz-vernetztes Ethylen-Propylen-Dien-Kautschuk (EPDM) und/oder ein Harz-vernetztes Ethylen-Vinylacetat-Copolymer (EVM) aufweist.

Das Verfahren 200 umfasst als dritten Schritt das Anordnen 205 eines Festigkeitsträgers 103 auf der Zwischenschicht 105.

Das Verfahren 200 umfasst als vierten Schritt das Extrudieren 207 einer Außenschicht 101, welche ein Ethylen-Propylen-Dien-Kautschuk (EPDM) aufweist, auf dem Festigkeitsträger 103.

Hier kann insbesondere das Extrudieren 201 der Sperrschicht 107, das Extrudieren 203 der Zwischenschicht 105 und das Extrudieren 207 der Außenschicht 101 als separate Extrusionsschritte 201, 203, 207 oder als ein gemeinsamer Co-Extrusionsschritt 201, 203, 207 durchgeführt werden.

Insbesondere umfasst das Extrudieren 203 der Zwischenschicht 105 den weiteren Verfahrensschritt, Vernetzen des Ethylen-Propylen-Dien-Kautschuks (EPDM) und/oder des Ethylen-Vinylacetat-Copolymers (EVM) mit einem Vernetzungsharz, insbesondere Phenol-Harz, um das Harz-vernetzte Ethylen-Propylen-Dien-Kautschuk (EPDM) und/oder das Harz-vernetzte Ethylen-Vinylacetat-Copolymer (EVM) der Zwischenschicht 105 zu erhalten.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidleitung
- 101: Außenschicht
- 103: Festigkeitsträger
- 105: Zwischenschicht
- 107: Sperrschicht
- 109: Leitungsinnenraum
- 200: Verfahren zum Herstellen einer Fluidleitung
- 201: Erster Verfahrensschritt: Extrudieren einer Sperrschicht
- 203: Zweiter Verfahrensschritt: Extrudieren einer Zwischenschicht
- 205: Dritter Verfahrensschritt: Aufbringen eines Festigkeitsträgers
- 207: Vierter Verfahrensschritt: Extrudieren einer Außenschicht

## Patentansprüche

1. Fluidleitung (100) zum Leiten eines Fluids, mit:
einer Außenschicht (101), welche ein Ethylen-Propylen-Dien-Kautschuk (EPDM) aufweist;
einem Festigkeitsträger (103), welcher innerhalb der Außenschicht (101) angeordnet ist;
einer Zwischenschicht (105), welche ein Harz-vernetztes Ethylen-Propylen-Dien-Kautschuk (EPDM) und/oder ein Harz-vernetztes Ethylen-Vinylacetat-Copolymer (EVM) aufweist, und welche innerhalb des Festigkeitsträgers (103) angeordnet ist, und
einer Sperrschicht (107), welche innerhalb der Zwischenschicht (105) angeordnet ist und welche einen Leitungsinnenraum (109) der Fluidleitung (100) zum Leiten des Fluids begrenzt, wobei die Sperrschicht (107) ausgebildet ist, eine Diffusion des Fluids durch die Sperrschicht (107) zu reduzieren,
wobei der Festigkeitsträger (103) zwischen der Außenschicht (101) und der Zwischenschicht (105) angeordnet ist.

2. Fluidleitung (100) nach Anspruch 1, wobei das Harz-vernetzte Ethylen-Propylen-Dien-Kautschuk (EPDM) und/oder das Harz-vernetzte Ethylen-Vinylacetat-Copolymer (EVM) ein Phenol-Vernetzungsharz aufweist, welches mit dem Ethylen-Propylen-Dien-Kautschuk (EPDM) und/oder Ethylen-Vinylacetat-Copolymer (EVM) vernetzt ist.

3. Fluidleitung (100) nach Anspruch 2, wobei das Phenol-Vernetzungsharz aus Phenol-Monomeren gebildete Phenol-Polymere aufweist, wobei die Phenol-Monomere insbesondere substituierte Phenol-Monomere umfassen.

4. Fluidleitung (100) nach Anspruch 3, wobei die substituierten Phenol-Monomere, Alkyl-substituierte und/oder Hydroxyalkyl-substituierte Phenol-Monomere umfassen, insbesondere mit verzweigten Alkyl-Substituenten und/oder mit Hydroxymethyl-Substituenten substituierte Phenol-Monomere.

5. Fluidleitung (100) nach einem der Ansprüche 2 bis 4, wobei das Phenol-Vernetzungsharz in einem Gewichtsanteil von 5 Gew.-% bis 15 Gew.-%, insbesondere von 7 Gew.-% bis 13 Gew.-%, bezogen auf das Gesamtgewicht des Ethylen-Propylen-Dien-Kautschuks (EPDM) und/oder des Ethylen-Vinylacetat-Copolymers (EVM) vor der Vernetzungsreaktion umfasst ist.

6. Fluidleitung (100) nach einem der vorangehenden Ansprüche, wobei das Harz-vernetzte Ethylen-Propylen-Dien-Kautschuk (EPDM) und/oder das Harz-vernetzte Ethylen-Vinylacetat-Copolymer (EVM) der Zwischenschicht (105) einen Vernetzungs-Aktivator umfasst, wobei der Vernetzungs-Aktivator insbesondere ein Halogenierungsreagenz umfasst.

7. Fluidleitung (100) nach einem der vorangehenden Ansprüche, wobei das Harz-vernetzte Ethylen-Propylen-Dien-Kautschuk (EPDM) und/oder das Harz-vernetzte Ethylen-Vinylacetat-Copolymer (EVM) der Zwischenschicht (105) einen weiteren Vernetzungs-Aktivator umfasst, welcher insbesondere ein Zeolith umfasst.

8. Fluidleitung (100) nach einem der vorangehenden Ansprüche, wobei die Fluidleitung (100) als ein formstabiler Formschlauch ausgebildet ist, wobei der Formschlauch insbesondere einen zweidimensional oder dreidimensional gekrümmten Verlauf aufweist.

9. Fluidleitung (100) nach einem der vorangehenden Ansprüche, wobei die Fluidleitung (100) als ein Spritzgussformteil oder ein Extrusionsformteil geformt ist.

10. Verfahren (200) zum Herstellen einer Fluidleitung (100) zum Leiten eines Fluids, umfassend die folgenden Schritte:
Extrudieren (201) einer Sperrschicht (107), welche einen Leitungsinnenraum (109) der Fluidleitung (100) zum Leiten des Fluids begrenzt, wobei die Sperrschicht (107) ausgebildet ist, eine Diffusion des Fluids durch die Sperrschicht (107) zu reduzieren;
Extrudieren (203) einer Zwischenschicht (105) auf der Sperrschicht (107), wobei die Zwischenschicht (105) ein Harz-vernetztes Ethylen-Propylen-Dien-Kautschuk (EPDM) und/oder ein Harz-vernetztes Ethylen-Vinylacetat-Copolymer (EVM) aufweist,
Anordnen (205) eines Festigkeitsträgers (103) auf der Zwischenschicht (105); und
Extrudieren (207) einer Außenschicht (101) auf dem Festigkeitsträger (103), wobei die Außenschicht (101) einen Ethylen-Propylen-Dien-Kautschuk (EPDM) aufweist,
wobei der Festigkeitsträger (103) zwischen der Außenschicht (101) und der Zwischenschicht (105) angeordnet ist.

## Claims

1. Fluid line (100) for conducting a fluid, comprising:
an outer layer (101), which comprises an ethylene-propylene-diene rubber (EPDM);
a reinforcement support (103), which is arranged within the outer layer (101);
an intermediate layer (105), which comprises a resin-crosslinked ethylene-propylene-diene rubber (EPDM) and/or a resin-crosslinked ethylene-vinyl-acetate copolymer (EVM), and which is arranged within the reinforcement support (103), and
a barrier layer (107), which is arranged within the intermediate layer (105) and which delimits a line interior (109) of the fluid line (100) for conducting the fluid, wherein the barrier layer (107) is adapted to reduce a diffusion of the fluid through the barrier layer (107),
wherein the reinforcement support (103) is arranged between the outer layer (101) and the intermediate layer (105).

2. Fluid line (100) according to claim 1, wherein the resin-crosslinked ethylene-propylene-diene rubber (EPDM) and/or the resin-crosslinked ethylene-vinyl-acetate copolymer (EVM) comprises a phenol-crosslinked resin, which is crosslinked with the ethylene-propylene-diene rubber (EPDM) and/or ethylene-vinyl-acetate copolymer (EVM).

3. Fluid line (100) according to claim 2, wherein the phenol-crosslinked resin comprises phenol polymers formed from phenol monomers, wherein the phenol monomers in particular comprise substituted phenol monomers.

4. Fluid line (100) according to claim 3, wherein the substituted phenol monomers comprise alkyl-substituted and/or hydroxyalkyl-substituted phenol monomers, in particular phenol monomers substituted with branched alkyl substituents and/or with hydroxymethyl substituents.

5. Fluid line (100) according to one of claims 2 to 4, wherein the phenol-crosslinked resin is comprised in a weight proportion of 5% by weight to 15% by weight, in particular from 7% by weight to 13% by weight, based on the total weight of the ethylene-propylene-diene rubber (EPDM) and/or the ethylene-vinyl-acetate copolymer (EVM) before the crosslinking reaction.

6. Fluid line (100) according to one of the preceding claims, wherein the resin-crosslinked ethylene-propylene-diene rubber (EPDM) and/or the resin-crosslinked ethylene-vinyl-acetate copolymer (EVM) of the intermediate layer (105) comprises a crosslinking activator, wherein the crosslinking activator in particular comprises a halogenation reagent.

7. Fluid line (100) according to one of the preceding claims, wherein the resin-crosslinked ethylene-propylene-diene rubber (EPDM) and/or the resin-crosslinked ethylene-vinyl-acetate copolymer (EVM) of the intermediate layer (105) comprises a further crosslinking activator, which in particular comprises a zeolite.

8. Fluid line (100) according to one of the preceding claims, wherein the fluid line (100) is formed as a dimensionally stable molded hose, wherein the molded hose in particular comprises a two-dimensional or a three-dimensional curved course.

9. Fluid line (100) according to one of the preceding claims, wherein the fluid line (100) is formed as an injection molding part or an extrusion molding part.

10. Method (200) for producing a fluid line (100) for conducting a fluid, comprising the following steps:
extruding (201) a barrier layer (107), which delimits a line interior (109) of the fluid line (100) for conducting the fluid, wherein the barrier layer (107) is adapted to reduce a diffusion of the fluid through the barrier layer (107);
extruding (203) an intermediate layer (105) on the barrier layer (107), wherein the intermediate layer (105) comprises a resin-crosslinked ethylene-propylene-diene rubber (EPDM) and/or a resin-crosslinked ethylene-vinyl-acetate copolymer (EVM),
arranging (205) a reinforcement support (103) on the intermediate layer (105); and
extruding (207) an outer layer (101) on the reinforcement support (103), wherein the outer layer (101) comprises an ethylene-propylene-diene rubber (EPDM),
wherein the reinforcement support (103) is arranged between the outer layer (101) and the intermediate layer (105).

## Revendications

1. Conduite de fluide (100) pour conduire un fluide, comprenant :
une couche externe (101), qui comprend un caoutchouc éthylène-propylène-diène (EPDM) ;
un support de renforcement (103), qui est disposé à l'intérieur de la couche externe (101) ;
une couche intermédiaire (105) qui comprend un caoutchouc éthylène-propylène-diène (EPDM) réticulé à la résine et/ou un copolymère éthylène-acétate de vinyle (EVM) réticulé à la résine et qui est disposée à l'intérieur du support de renforcement (103), et
une couche barrière (107), qui est disposée à l'intérieur de la couche intermédiaire (105) et qui délimite une ligne intérieure (109) de la conduite de fluide (100) pour conduire le fluide, la couche barrière (107) étant adaptée pour réduire un diffusion du fluide à travers la couche barrière (107),
le support de renforcement (103) étant disposé entre la couche externe (101) et la couche intermédiaire (105).

2. Conduite de fluide (100) selon la revendication 1, dans laquelle le caoutchouc éthylène-propylène-diène (EPDM) réticulé à la résine et/ou le copolymère éthylène-acétate de vinyle (EVM) réticulé à la résine comprend une résine réticulée au phénol, qui est réticulé avec le caoutchouc éthylène-propylène-diène (EPDM) et/ou le copolymère éthylène-acétate de vinyle (EVM).

3. Conduite de fluide (100) selon la revendication 2, dans laquelle la résine réticulée au phénol comprend des polymères phénoliques formés à partir de monomères phénoliques, dans laquelle les monomères phénoliques comprennent notamment des monomères phénols substitués.

4. Conduite de fluide (100) selon la revendication 3, dans laquelle les monomères phénols substitués comprennent des monomères phénols alkyl-substitués et/ou hydroxyalkyl-substitués, en particulier des monomères phénols substitués par des substituants alkyle ramifié et/ou par des substituants hydroxyméthyle.

5. Conduite de fluide (100) selon l'une des revendications 2 à 4, dans laquelle la résine réticulée au phénol est comprise dans une proportion pondérale de 5% en poids à 15% en poids, notamment de 7% en poids à 13% en en poids, sur la base du poids total du caoutchouc éthylène-propylène-diène (EPDM) et/ou du copolymère éthylène-acétate de vinyle (EVM) avant la réaction de réticulation.

6. Conduite de fluide (100) selon l'une des revendications précédentes, dans laquelle le caoutchouc éthylène-propylène-diène (EPDM) réticulé à la résine et/ou le copolymère éthylène-acétate de vinyle (EVM) réticulé à la résine de la couche intermédiaire (105) comprend un activateur de réticulation, l'activateur de réticulation comprenant notamment un réactif d'halogénation.

7. Conduite de fluide (100) selon l'une des revendications précédentes, dans laquelle le caoutchouc éthylène-propylène-diène (EPDM) réticulé à la résine et/ou le copolymère éthylène-acétate de vinyle (EVM) réticulé à la résine de la couche intermédiaire (105) comprend un autre activateur de réticulation, qui comprend en particulier une zéolithe.

8. Conduite de fluide (100) selon l'une des revendications précédentes, dans laquelle la conduite de fluide (100) est formée sous la forme d'un tuyau moulé dimensionnellement stable, dans lequel le tuyau moulé comprend en particulier une trajectoire courbe bidimensionnelle ou tridimensionnelle.

9. Conduite de fluide (100) selon l'une des revendications précédentes, dans laquelle la conduite de fluide (100) est formée comme une pièce de moulage par injection ou une pièce de moulage par extrusion.

10. Procédé (200) de réalisation d'une conduite fluidique (100) pour conduire un fluide, comprenant les étapes suivantes :
extruder (201) une couche barrière (107), qui délimite une ligne intérieure (109) de la conduite de fluide (100) pour conduire le fluide, la couche barrière (107) étant adaptée pour réduire une diffusion du fluide à travers la couche barrière (107) ;
extruder (203) une couche intermédiaire (105) sur la couche barrière (107), la couche intermédiaire (105) comprenant un caoutchouc éthylène-propylène-diène (EPDM) réticulé par résine et/ou un caoutchouc éthylène-vinyle-diène réticulé par résine copolymère d'acétate (EVM),
disposer (205) un support de renforcement (103) sur la couche intermédiaire (105) ; et
extruder (207) une couche externe (101) sur le support de renforcement (103), dans lequel la couche externe (101) comprend un caoutchouc éthylène-propylène-diène (EPDM),
le support de renforcement (103) étant disposé entre la couche externe (101) et la couche intermédiaire (105).
